# EUROPEAN PATENT APPLICATION

(11) **EP 4 660 796 A1**
(43) Date of publication of application: **10.12.2025**
(21) Application number: 24813789.5
(22) Date of filing: 07.03.2024
(51) Int. Cl.: G06F 9/451, G06F 16/9535

(54) **THEME GENERATION METHOD AND ELECTRONIC DEVICE**

(30) Priority: 26.05.2023 CN 202310606102
(71) Applicant: Honor Device Co., Ltd., Shenzhen, Guangdong 518040 (CN)
(72) Inventor: WANG, Siqi, Shenzhen, Guangdong 518040 (CN)
(74) Representative: Gill Jennings & Every LLP
(86) International application number: PCT/CN2024/080488
(87) International publication number: WO 2024/244583

(57) **Abstract**

Provided are a method for generating a theme and an electronic device. The method includes: acquiring first information about a first user; generating one or more first themes according to the first information, where the first theme includes a plurality of pieces of first wallpaper and a plurality of first icons; and displaying a first interface, where the first interface includes first indication information, and the first indication information indicates the first theme. Through the disclosure, a theme satisfying a user requirement can be generated based on user information such that a personalized theme that a user likes/is interested in can be provided for the user, user experience can be improved, and functional availability can be effectively improved.

## Description

The disclosure claims the benefit of priority to Chinese Patent Application No. 202310606102.7, filed with the China National Intellectual Property Administration on May 26, 2023 and entitled "METHOD FOR GENERATING THEME AND ELECTRONIC DEVICE", which is incorporated in its entirety herein by reference.

### TECHNICAL FIELD

The disclosure relates to the technical field of computers, and particularly relates to a method for generating a theme and an electronic device.

### BACKGROUND

At present, a user can change a set theme through a setting function of a terminal. However, themes provided by the setting function of the terminal have problems of a fixed form, a single type, a relatively small number, etc. Consequently, personalized requirements of the user cannot be satisfied, and functional availability is limited.

### SUMMARY

The disclosure discloses a method for generating a theme and an electronic device. A theme satisfying a user requirement can be generated based on user information such that a personalized theme that a user likes/is interested in can be provided for the user, user experience can be improved, and functional availability can be effectively improved.

In a first aspect, an embodiment of the disclosure provides a method for generating a theme. The method is applied to an electronic device, and includes: acquiring first information about a first user; generating one or more first themes according to the first information, where the first theme includes a plurality of pieces of first wallpaper and a plurality of first icons; and displaying a first interface, where the first interface includes first indication information, and the first indication information indicates the first theme.

In the above method, the electronic device may acquire the first information about the first user. The first information may represent a user preference. One or more first themes that the user likes/loves are generated based on such first information. A personalized requirement of the user can be satisfied, various personalized themes can be provided for the user, user experience can be improved, and functional availability can be relatively high.

In a possible implementation, the plurality of pieces of first wallpaper include wallpaper of a desktop, wallpaper of a lock screen interface, and wallpaper of an interface of an application. The plurality of first icons include an icon of an application and an icon of a functional component.

In the above method, the plurality of pieces of first wallpaper include different types of wallpaper (that is, the wallpaper of the desktop, the wallpaper of the lock screen interface, and the wallpaper of the interface of the application mentioned above). The plurality of first icons include different forms of icons (that is, the icon of the application and the icon of the functional component mentioned above). First themes combined by the plurality of pieces of first wallpaper and the plurality of first icons are richer in form, larger in number, and more in type. Various personalized themes can be provided for the user, user selection can be wider, and user experience can be improved.

In a possible implementation, the acquiring first information about a first user includes: receiving the first information input by the first user, which includes at least one of: receiving text information input by the first user, receiving audio information uploaded by the first user, receiving speech information recorded by the first user, receiving image information uploaded by the first user, and receiving video information uploaded by the first user.

In the above method, the first user can acquire, by inputting information (that is, the first information about the first user mentioned above) about the first user in a plurality of modalities, which includes but is not limited to a text, a speech, an image, audio, video, etc., one or more first themes satisfying a requirement of the first user. A personalized requirement of the user can be satisfied. Moreover, the user can be prevented from spending a large amount of time on selection and relatively-complex operations, and user experience can be further improved.

In a possible implementation, the acquiring first information about a first user includes: receiving a first operation; transmitting a first request to a network device in response to the first operation; and receiving the first information transmitted by the network device based on the first request, where the first information is information input by an associated user of the first user.

In the above method, the electronic device may acquire, by the network device, user information input by the associated user of the first user. Thus, one or more first themes having styles consistent with that of a theme of the associated user can be generated. A requirement (for example, a requirement of implementing a theme having a style the same as that of the associated user) of the first user can be satisfied. User experience can be further improved.

In a possible implementation, the first icon is related to the first information. The first icon indicates a first application. A pattern and an outline of the first icon are both related to the first information, and a watermark of the first icon is related to information about the first application; or a pattern and an outline of the first icon are both related to information about the first application, and a watermark of the first icon is related to the first information; or a pattern of the first icon is related to the first information, and an outline of the first icon is related to information about the first application; or a pattern of the first icon is related to information about the first application, and an outline of the first icon is related to the first information. The information about the first application includes at least one of: a name, a label, a function, and a system default original icon of the first application.

In the above method, the first icon is related to both the first information and the information about the first application. Through the plurality of methods mentioned above, the first icon that the user likes/loves can be generated, and the user can conveniently identify the first application corresponding to the first icon. For example, an application corresponding to a pattern and an outline of an icon cannot be directly identified by the user, and information about an application can be indicated by a watermark such that a use feeling of the user can be effectively improved. Moreover, through these methods, consistency of styles of the first icon and the first wallpaper can be ensured. An overall style of a theme has high uniformity and desirable effect. Functional availability can be effectively improved.

In a possible implementation, the first interface includes second indication information and third indication information. The second indication information indicates a second theme of the plurality of first themes. The third indication information indicates a third theme of the plurality of first themes. The method further includes: receiving a second operation on the second indication information and the third indication information; and displaying a second interface in response to the second operation, where the second interface includes a second icon and a third icon, the second icon indicates a second application, the third icon indicates a third application, functional categories to which the second application and the third application belong are different, the second icon belongs to an icon of the second theme, and the third icon belongs to an icon of the third theme.

In some examples, the functional categories may be categories divided by the electronic device according to functions of applications. For example, a music application, a reading application, and a store application may be categorized as entertainment applications. A WeChat application, a short message service application, and a mail application may be categorized as communication applications.

In the above method, the electronic device may divide categories of corresponding icons according to functions of applications. Different categories of icons may correspond to different theme styles. Thus, a user can conveniently manage and identify applications corresponding to different styles of icons. A use feeling of the user can be effectively improved, and functional availability can be effectively improved.

In a possible implementation, the first interface includes second indication information and third indication information. The second indication information indicates a second theme of the plurality of first themes. The third indication information indicates a third theme of the plurality of first themes. The method further includes: receiving a second operation on the second indication information and the third indication information; and displaying the second interface in response to the second operation, where the second interface includes a first area and a second area, wallpaper and an icon of the first area belong to the second theme, and wallpaper and an icon of the second area belong to the third theme.

In the above method, the first user may select a plurality of themes of the generated one or more first themes, and set the plurality of themes as current themes of the electronic device. The electronic device may display different themes in different areas of a screen such that theme interfaces of the electronic device can be richer. Diversified requirements of the first user can be satisfied. User experience can be further improved.

In a possible implementation, the method further includes: receiving a third operation on the first indication information on the first interface; displaying a third interface in response to the third operation, where the third interface includes a fourth icon, and the fourth icon indicates a fourth application; receiving a fourth operation on the fourth icon on the third interface; modifying the fourth icon to a fifth icon in response to the fourth operation; and displaying the fifth icon on the third interface, where the fifth icon indicates the fourth application.

In the above method, one application may correspond to a plurality of icons. The electronic device may display one of the icons as an icon of the application. When a user is not satisfied with the icon displayed by the electronic device, the electronic device may change the icon of the application in response to a user operation. Thus, a personalized requirement of the user can be satisfied.

In a possible implementation, the generating one or more first themes according to the first information includes: generating a first image according to the first information; generating the plurality of pieces of first wallpaper and the plurality of first icons according to the first image; and obtaining, in a case that a matching degree of the plurality of pieces of first wallpaper and the plurality of first icons is greater than or equal to a first preset threshold, the first theme according to the plurality of pieces of first wallpaper and the plurality of first icons.

In the above method, the electronic device may acquire the first information about the first user, and generate, based on the first information, a first image capable of indicating a user preference. The first image may serve as a unified standard for generating a plurality of pieces of first wallpaper and a plurality of first icons of a first theme such that styles of the plurality of pieces of first wallpaper and the plurality of first icons can be kept consistent. Finally, the electronic device may determine whether a matching degree of the plurality of pieces of first wallpaper and the plurality of first icons is greater than or equal to a first preset threshold, and obtain the first theme. Through such a method, uniformity of an overall style of the first theme can be improved, an ornamental performance of the theme can be enhanced, an aesthetic requirement of the user during usage can be satisfied, and user experience can be further improved.

In a possible implementation, the first image includes a plurality of second images. The first icon corresponds to one or more second images.

In a possible implementation, the generating one or more first themes according to the first information includes: generating a plurality of pieces of second wallpaper and a plurality of sixth icons according to the first information, where the second wallpaper corresponds to a first score, and the sixth icon corresponds to a second score; generating a plurality of fourth themes according to the plurality of pieces of second wallpaper and the plurality of sixth icons; acquiring a plurality of third scores corresponding to the plurality of fourth themes, where the third score is related to the first score and the second score; and selecting the one or more first themes from the plurality of fourth themes according to the plurality of third scores, where a score corresponding to the first theme is greater than or equal to a preset threshold.

In the above method, the first score may represent a recommendation degree of the second wallpaper. A higher first score indicates that the second wallpaper is closer to real wallpaper. The second score may represent a recommendation degree of the sixth icon. A higher second score indicates that the sixth icon is closer to a real icon. The third score may represent a recommendation degree of the fourth theme. A higher third score indicates a better overall effect of the fourth theme. Finally, according to a plurality of third scores, one or more first themes of which scores rank top are selected as recommended themes for the user to select. Thus, a personalized requirement of the user can be satisfied, and user experience can be improved.

In a possible implementation, after the displaying a first interface, the method further includes: acquiring second information about a second user; generating one or more fifth themes according to the second information, where the fifth theme includes a plurality of pieces of third wallpaper and a plurality of seventh icons, and the fifth theme is different from the first theme; and displaying a fourth interface, where the fourth interface includes fourth indication information, and the fourth indication information indicates the fifth theme.

In the above method, one or more themes generated by the electronic device based on information (such as second information about a second user) about different users are different. Thus, personalized themes can be provided for different users in a targeted manner, different requirements of the different users can be satisfied, and user experience can be further improved.

In a second aspect, the disclosure provides an electronic device. The electronic device includes a transceiver, a processor, and a memory. The above memory is configured to store a computer program. The above processor calls the above computer program to perform the method for generating a theme in any one of the possible implementations of the first aspect.

In a third aspect, the disclosure provides an electronic device. The electronic device includes one or more processors and one or more memories. The one or more memories are coupled to the one or more processors. The one or more memories are configured to store computer program code. The computer program code includes computer instructions. When executing the computer instructions, the one or more processors cause the electronic device to perform the method for generating a theme in any one of the possible implementations of the first aspect mentioned above.

In a fourth aspect, the disclosure provides a computer storage medium. The computer storage medium stores a computer program. The computer program implements the method for generating a theme in any one of the possible implementations of any one of the above aspects when executed by a processor.

In a fifth aspect, the disclosure provides a computer program product. When running on an electronic device, the computer program product causes the electronic device to perform the method for generating a theme in any one of the possible implementations of the first aspect mentioned above.

In a sixth aspect, the disclosure provides an electronic device. The electronic device includes an apparatus for performing the method introduced in any one of the implementations of the first aspect of the disclosure. The above electronic device is, for example, a chip.

### BRIEF DESCRIPTION OF DRAWINGS

In order to more clearly illustrate technical solutions in embodiments of the disclosure or in the prior art, accompanying drawings required to be used in the descriptions of the embodiments or the prior art will be briefly introduced below. Apparently, the accompanying drawings in the following descriptions are merely some embodiments of the disclosure. Those of ordinary skill in the art can derive other accompanying drawings from these accompanying drawings without making creative efforts.
FIG. 1 is a schematic diagram of a hardware structure of an electronic device 100 according to the disclosure;
FIG. 2 is a schematic diagram of a software architecture of an electronic device 100 according to the disclosure;
FIG. 3 is a schematic diagram of a work flow of various modules of an electronic device 100 according to the disclosure;
FIG. 4A and FIG. 4B are schematic diagrams of user interfaces according to the disclosure;
FIG. 5A to FIG. 5D are schematic diagrams of user interfaces according to the disclosure;
FIG. 6A to FIG. 6D are schematic diagrams of user interfaces according to the disclosure;
FIG. 7 is a schematic diagram of a user interface according to the disclosure; and
FIG. 8 is a schematic flowchart of a method for generating a theme according to the disclosure.

### DESCRIPTION OF EMBODIMENTS

Technical solutions in embodiments of the disclosure will be described below in combination with accompanying drawings. In the descriptions of embodiments of the disclosure, the character "/" means "or" unless otherwise specified. For example, A/B may denote A or B. The term "and/or" in the text describing only an association relationship between associated objects denotes that three may be three relationships. For example, A and/or B may denote: A alone, both A and B, and B alone. In addition, in the descriptions of embodiments of the disclosure, the term "plurality of" refers to two or more.

The terms "first" and "second" below are used for descriptive purposes only, and cannot be construed as implying or implying relative importance or implicitly indicating the number of technical features indicated. Thus, a feature defined by the term "first" or "second" may explicitly or implicitly include one or more features. In the descriptions of embodiments of the disclosure, the term "plurality of' refers to two or more unless otherwise stated.

At present, a user may set a theme of a terminal through the following two methods.

Method 1: A setting application of a terminal may provide a theme setting function, and specifically provide a plurality of themes for a user to select. However, the themes provided by the theme setting function of the terminal have problems of fixed form, small number, and single type. Thus, various personalized themes cannot be provided for the user, and user selection is limited.

Method 2: A user may set a theme by an application (such as a theme store) of a terminal. For example, the user may select, through a search function (which is specifically to perform a search according to a keyword, etc. input by the user) provided by the application, a theme satisfying a user requirement from massive themes, and set the theme. Through such a method, a user is required to spend a large amount of time on selection, and is required to perform relatively-complex operations. Moreover, these themes are generated by a publisher in advance and uploaded to an application. The user can select a theme only from existing themes such that a personalized requirement of the user cannot be satisfied probably.

Thus, no personalized theme satisfying a user requirement can be generated for the user through the two methods, resulting in poor user experience.

In addition, the user may further set an image satisfying a user requirement as wallpaper of a theme. For example, a terminal may acquire an image uploaded by the user and set the image as wallpaper (such as desktop wallpaper and/or lock screen wallpaper), but cannot set an icon of a theme. It can be understood that the icon of the theme still keeps a style of an original icon. Thus, styles of the wallpaper and the icon of the theme set through such a method are inconsistent, and uniformity of an overall style of the theme, an ornamental performance, user experience, and functional availability are poor.

The disclosure provides a method for generating a theme. The method is applied to an electronic device. The electronic device may acquire user information (or may be referred to as multi-modality information, which includes but is not limited to a text, a speech, an image, audio, video, etc.) in a plurality of modalities, and generate at least one theme according to the multi-modality information. The multi-modality information may represent a user preference. Through the disclosure, a more accurate user feature can be obtained based on the multi-modality information, and a theme that a user likes/loves can be generated based on such a user feature. A personalized requirement of the user can be satisfied, a personalized theme suitable for the user can be provided for the user, user experience can be improved, and functional availability can be relatively high. Moreover, styles of the wallpaper and the icon of the theme generated through such a method can be consistent. Uniformity of an overall style of the theme and an ornamental performance are high. User experience can be further improved.

The theme in the disclosure may include desktop wallpaper, lock screen wallpaper, and some icons. The some icons may include icons (which may be referred to as application icons for short) of applications on a desktop. Optionally, the theme may further include background wallpaper (which may be referred to as interface wallpaper for short) of an interface of an application, such as interface wallpaper of a call application, a short message service application, and a memo application. Optionally, the theme may further include an icon of a functional component. The functional component may be but is not limited to a positioning functional component, a flashlight functional component, and a mute functional component at a control center, and a weather functional component, a time functional component, a calendar functional component, an electric quantity functional component, a folder functional component of a plurality of applications, a service card functional component, and a floating ball functional component on a desktop.

For ease of description, subsequently, different types of wallpaper (such as the desktop wallpaper, the lock screen wallpaper, and the interface wallpaper mentioned above) may be collectively referred to as wallpaper, and an application icon, a function icon, a component, a card, a floating ball, and display content in other forms may be collectively referred to as icons.

In the disclosure, the electronic device may be a mobile phone, a tablet computer, a handheld computer, a desktop computer, a laptop computer, an ultra-mobile personal computer (UMPC), a netbook, a cellular phone, a personal digital assistant (PDA), a smart home device such as a smart television, a wearable device such as a smart bracelet, a smart watch, and smart glasses, an extended reality (XR) device such as an augmented reality (AR) device, a virtual reality (VR) device, and a mixed reality (MR) device, an in-vehicle device, a smart city device, etc. Specific types of the electronic device are not specially limited in the disclosure.

An exemplary electronic device 100 in an embodiment of the disclosure will be introduced next.

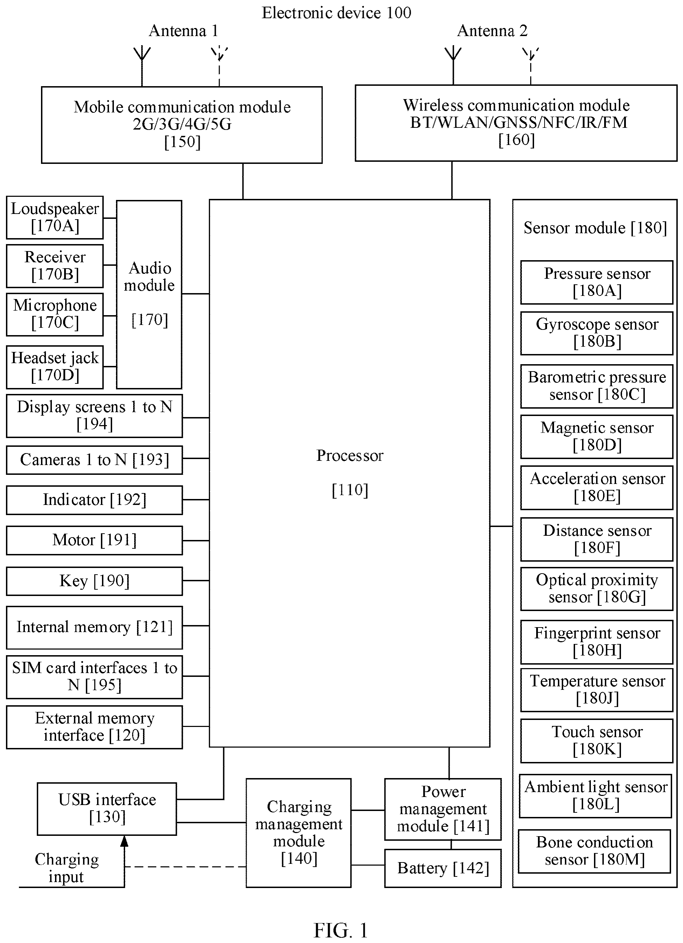

FIG. 1 illustrates a schematic diagram of a hardware structure of an electronic device 100.

As shown in FIG. 1, the electronic device 100 may include a processor 110, an external memory interface 120, an internal memory 121, a universal serial bus (USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a key 190, a motor 191, an indicator 192, a camera 193, a display 194, a subscriber identification module (SIM) card interface 195, etc. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, etc.

It can be understood that the structure illustrated in an embodiment of the disclosure does not constitute a specific limitation on the electronic device 100. In some other embodiments of the disclosure, the electronic device 100 may include more or fewer components than those shown in the figure, combine some components, split some components, or differently arrange components. The components shown in the figure may be implemented as hardware, software, or their combinations.

The processor 110 may include one or more processing units. For example, the processor 110 may include an application processor (AP), a modem, a graphics processing unit (GPU), an image signal processor (ISP), a controller, a video codec, a digital signal processor (DSP), a baseband processor, a neural-network processing unit (NPU), etc. Different processing units may be independent devices, or may be integrated to one or more processors.

The controller may generate an operation control signal according to an instruction operation code and a time-sequence signal, and control acquirement and execution of instructions.

A memory may be further arranged in the processor 110 and is configured to store instructions and data. In an implementation, the memory in the processor 110 is a cache. The memory may store instructions or data recently used or cyclically used by the processor 110. If the processor 110 is required to use the instructions or data again, the processor may directly call the instructions or the data from the memory. Repeated access is prevented, and waiting time of the processor 110 is reduced such that system efficiency is improved.

In an implementation, the processor 110 may include one or more interfaces. The interface may include an inter-integrated circuit (I2C) interface, an inter-integrated circuit sound (I2S) interface, a pulse code modulation (PCM) interface, a universal asynchronous receiver/transmitter (UART) interface, a mobile industry processor interface (MIPI), a general-purpose input/output (GPIO) interface, a subscriber identity module (SIM) interface, a universal serial bus (USB) interface, etc.

The charging management module 140 is configured to receive charging input from a charger. The charger may be a wireless charger or a wired charger. In some embodiments of wired charging, the charging management module 140 may receive charging input of the wired charger through the USB interface 130. In some embodiments of wireless charging, the charging management module 140 may receive wireless charging input by a wireless charging coil of the electronic device 100. When the charging management module 140 charges a battery 142, the power management module 141 may supply power to the electronic device.

The power management module 141 is configured to be connected to the battery 142, the charging management module 140, and the processor 110. The power management module 141 receives input from the battery 142 and/or the charging management module 140, and supplies power to the processor 110, the internal memory 121, the display 194, the camera 193, the wireless communication module 160, etc. The power management module 141 may be further configured to monitor parameters such as a battery capacity, a number of battery cycles, and a battery health state (power leakage and impedance). In some other embodiments, the power management module 141 may be arranged in the processor 110. In some other embodiments, the power management module 141 and the charging management module 140 may be arranged in a same device.

A wireless communication function of the electronic device 100 may be implemented by the antenna 1, the antenna 2, the mobile communication module 150, the wireless communication module 160, the modem, the baseband processor, etc.

The mobile communication module 150 may provide a solution to wireless communication including 2G/3G/4G/5G, etc. applied to the electronic device 100. The mobile communication module 150 may include at least one filter, a switch, a power amplifier, a low noise amplifier (LNA), etc. The mobile communication module 150 may receive an electromagnetic wave by the antenna 1, filter and amplify the received electromagnetic wave, etc., and transmit the electromagnetic wave to the modem for demodulation. The mobile communication module 150 may further amplify a signal modulated by the modem, and convert the signal to an electromagnetic wave by the antenna 1 for radiation. In an implementation, at least some functional modules of the mobile communication module 150 may be arranged in the processor 110. In an implementation, at least some functional modules of the mobile communication module 150 and at least some modules of the processor 110 may be arranged in a same device.

The wireless communication module 160 may provide a solution to wireless communication applied to the electronic device 100 and including wireless local area networks (WLAN) (such as wireless fidelity (Wi-Fi)), Bluetooth (BT), a global navigation satellite system (GNSS), frequency modulation (FM), near field communication (NFC), and an infrared (IR) technology. The wireless communication module 160 may be one or more devices that integrate at least one communication processing module. The wireless communication module 160 receives an electromagnetic wave by the antenna 2, modulates a frequency of the electromagnetic wave signal, filters the electromagnetic wave signal, and transmits a processed signal to the processor 110. The wireless communication module 160 may further receive a to-be-transmitted signal from the processor 110, modulate a frequency of the to-be-transmitted signal, amplify the to-be-transmitted signal, and convert the to-be-transmitted signal to an electromagnetic wave by the antenna 2 for radiation.

In an implementation, the antenna 1 and the mobile communication module 150 of the electronic device 100 are coupled to each other, and the antenna 2 and the wireless communication module 160 are coupled to each other. Thus, the electronic device 100 can be in communication with a network and other devices through a wireless communication technology. The wireless communication technology may include a global system for mobile communications (GSM), a general packet radio service (GPRS), code division multiple access (CDMA), wideband code division multiple access (WCDMA), time-division code division multiple access (TD-SCDMA), long term evolution (LTE), BT, a GNSS, WLAN, NFC, FM, an IR technology, etc. The GNSS may include a global positioning system (GPS), a global navigation satellite system (GLONASS), a beidou navigation satellite system (BDS), a quasi-zenith satellite system (QZSS), and/or a satellite based augmentation system (SBAS).

The electronic device 100 implements a display function by the GPU, the display 194, the application processor, etc. The GPU is a microprocessor for processing an image and is connected to the display 194 and the application processor. The GPU is configured to perform mathematical and geometric computation and render graphics. The processor 110 may include one or more GPUs that execute program instructions to generate or change display information.

The display 194 is configured to display an image, video, etc. The display 194 includes a display panel. A liquid crystal display (LCD), an organic light-emitting diode (OLED), an active-matrix organic light emitting diode (AMOLED), a flex light-emitting diode (FLED), a Miniled, a MicroLed, a Micro-oLed, a quantum dot light emitting diodes (QLED), etc. may serve as the display panel. In an implementation, the electronic device 100 may include 1 or N displays 194, where N is a positive integer greater than 1.

The electronic device 100 may implement a photographing function by the ISP, the camera 193, the video codec, the GPU, the display 194, the application processor, etc.

The ISP is configured to process data fed back by the camera 193. For example, during photographing, a shutter is opened, and light is transmitted to a photosensitive element of the camera through a lens. An optical signal is converted to an electrical signal. The photosensitive element of the camera transmits the electrical signal to the ISP for processing. The electrical signal is converted to an image visible to a naked eye. The ISP may further perform algorithm optimization on a noise point, brightness, and color of the image. The ISP may further optimize parameters such as exposure and a color temperature of a photographing scene. In an implementation, the ISP may be arranged in the camera 193.

The camera 193 is configured to capture a static image or video. An optical image of an object is generated through a lens to be projected onto the photosensitive element. The photosensitive element may be a charge coupled device (CCD) or a complementary metal-oxide-semiconductor (CMOS) phototransistor. The photosensitive element converts an optical signal to an electrical signal, and then transfers the electrical signal to the ISP which converts the electrical signal to a digital image signal. The ISP outputs the digital image signal to the DSP for processing. The DSP converts the digital image signal to an image signal in a standard form, such as RGB and YUV. In an implementation, the electronic device 100 may include 1 or N cameras 193, where N is a positive integer greater than 1.

The external memory interface 120 may be configured to be connected to an external storage card such as a micro SD card such that a storage capability of the electronic device 100 can be expanded.

The internal memory 121 may be configured to store computer-executable program code which includes instructions.

The electronic device 100 may implement an audio function by the audio module 170, the speaker 170A, the receiver 170B, the microphone 170C, the headset jack 170D, the application processor, etc.

The audio module 170 is configured to convert digital audio information to analog audio signal output and convert analog audio input to a digital audio signal. The audio module 170 may be further configured to encode and decode an audio signal.

The speaker 170A, alternatively referred to as a "loudspeaker", is configured to convert an electrical audio signal to a sound signal.

The receiver 170B, alternatively referred to as a "telephone receiver", is configured to convert an electrical audio signal to a sound signal.

The microphone 170C, alternatively referred to as a "voice tube" and a "mike", is configured to convert a sound signal to an electrical signal.

The headset jack 170D is configured to be connected to a wired headset.

The pressure sensor 180A is configured to sense a pressure signal, and may convert the pressure signal to an electrical signal.

The gyroscope sensor 180B may be configured to determine a motion pose of the electronic device 100. In an implementation, angular velocities of the electronic device 100 around three axes (that is, x, y, and z axes) may be determined by the gyroscope sensor 180B.

The barometric pressure sensor 180C is configured to measure a barometric pressure.

The magnetic sensor 180D includes a Hall sensor. The electronic device 100 may detect opening and closing of a flip leather case by the magnetic sensor 180D.

The acceleration sensor 180E may measure acceleration of the electronic device 100 in all directions (generally directions of three axes).

The distance sensor 180F is configured to measure a distance.

The optical proximity sensor 180G may include, for example, a light emitting diode (LED) and an optical detector, such as a photodiode.

The ambient light sensor 180L is configured to sense ambient light brightness.

The fingerprint sensor 180H is configured to collect fingerprints. The electronic device 100 may use collected fingerprint features to perform unlocking, access an application lock, take a photograph, and answer a call.

The temperature sensor 180J is configured to measure a temperature.

The touch sensor 180K is alternatively referred to as a "touch device". The touch sensor 180K may be arranged on the display 194. The touch sensor 180K and the display 194 form a touch screen. The touch sensor 180K is configured to detect a touch operation on or near the touch sensor. The touch sensor may transfer the detected touch operation to the application processor such that a touch event type can be determined. Visual output related to the touch operation may be provided by the display 194. In some other embodiments, the touch sensor 180K may alternatively be arranged on a surface of the electronic device 100 at a position different from that of the display 194.

The bone conduction sensor 180M may acquire a vibration signal.

The key 190 includes a power key, a volume key, etc.

The motor 191 may generate a vibrating alert.

The indicator 192 may be an indicator light, and may be configured to indicate a charging state, an electric quantity change, a message, a missed call, a notification, etc.

The SIM card interface 195 is configured to be connected to an SIM card.

A layered architecture, an event-driven architecture, a micro kernel architecture, a micro service architecture, or a cloud architecture may be used as a software system of the electronic device 100. For example, the software system of the layered architecture may be an Android system, a harmony operating system (OS), or another software system. In an embodiment of the disclosure, a software structure of the electronic device 100 is illustratively described with an Android system of a layered architecture as an example.

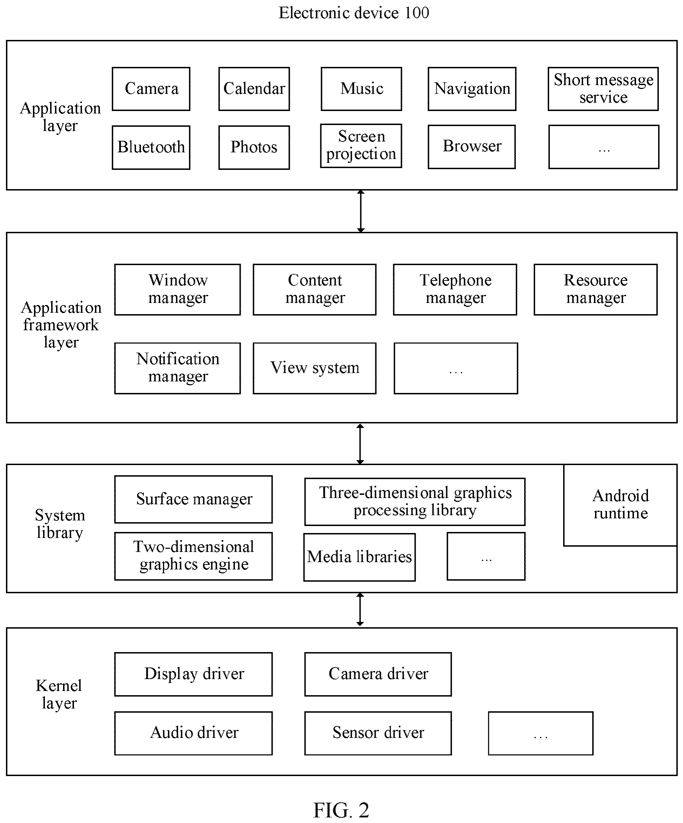

FIG. 2 illustrates a schematic diagram of a software architecture of an electronic device 100.

Software is divided to several layers by a layered architecture. Each layer has a clear role and task. The layers are in communication with each other through a software interface. In an implementation, the Android system is divided to four layers, which are an application layer, an application framework layer, Android runtime and a system library, and a kernel layer from top to bottom.

The application layer may include a series of application packages.

As shown in FIG. 2, the application package may include a camera application, a gallery application, a music application, a calendar application, a short message service application, a call application, a navigation application, a Bluetooth application, a browser application, a screen projection application, etc.

As shown in FIG. 2, the application framework layer may include a window manager, a content provider, a view system, a phone manager, a resource manager, a notification manager, etc.

The content provider is configured to store and acquire data and make the data accessible to an application. The data may include video, an image, audio, calls that are made and answered, a browsing history, a bookmark, a phone book, etc.

The view system includes a visual control, such as a control for displaying a text and a control for displaying an image. The view system may be configured to establish an application. A display interface may be composed of one or more views. For example, a display interface including a short message notification icon may include a view for displaying a text and a view for displaying an image.

The resource manager provides various resources for an application, such as a localized character string, an icon, an image, a layout file, and a video file.

The Android runtime includes a kernel library and a virtual machine. The Android runtime is responsible for scheduling and managing the Android system.

The system library may include a plurality of function modules, such as: a surface manager, media libraries, a three-dimensional graphics processing library (such as: OpenGL ES), and a 2D graphics engine (such as: an SGL).

The surface manager is configured to manage a display subsystem, and provide fusion of 2D and 3D layers for a plurality of applications.

The media libraries support reproduction and recording of a plurality of common audio and video formats, static image files, etc. The media libraries may support a plurality of audio and video encoding formats, such as: MPEG4, H.264, MP3, AAC, AMR, JPG, and PNG.

The three-dimensional graphics processing library is configured to draw three-dimensional graphics, render and compose images, process layers, etc.

The 2D graphics engine is a drawing engine for 2D drawing.

The kernel layer is a layer between hardware and software. The kernel layer includes at least a display driver, a camera driver, an audio driver, and a sensor driver.

Work flows of software and hardware of the electronic device 100 will be illustrated below in combination with a theme setting scene of a setting application.

When the touch sensor 180K receives a touch operation, a corresponding hardware interrupt is transmitted to the kernel layer. The kernel layer processes the touch operation to an original input event (including information such as touch coordinates and a time stamp of the touch operation). The original input event is stored at the kernel layer. The application framework layer acquires the original input event from the kernel layer, and identifies a control corresponding to the input event. With an example in which the touch operation is a touch single-click operation, and a control corresponding to the single-click operation is a control of a setting application, the setting application calls an interface of the application framework layer and then controls the display driver by calling the kernel layer. A main interface of the setting application is displayed by the display 194.

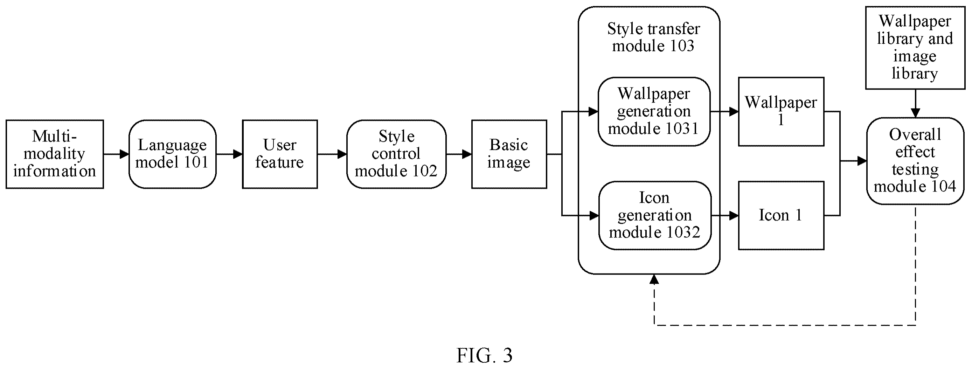

FIG. 3 illustrates a schematic diagram of a work flow of various modules of an electronic device 100.

As shown in FIG. 3, an electronic device 100 may include a theme generation model. The theme generation model may include a language model 101, a style control module 102, a style transfer module 103, and an overall effect verification module 104. The style transfer module 103 may include a wallpaper generation module 1031 and an icon generation module 1032.

Work flows of the modules shown in FIG. 3 will be illustratively described below in combination with one training process of the theme generation model.

First, user information in a plurality of modalities may be input to the language model 101. The language model 101 may analyze the user information in a plurality of modalities, extract a feature parameter (which may be referred to as a user feature) capable of representing a user preference, and output the user feature. This can be understood as representing the user preference by the feature parameter. The user feature output by the language model 101 may be input to the style control module 102 for processing. A basic image corresponding to the user feature is output. The basic image output by the style control module 102 may be separately input to the wallpaper generation module 1031 and the icon generation module 1032 of the style transfer module 103 for processing. The wallpaper generation module 1031 outputs wallpaper 1. The icon generation module 1032 outputs an icon 1. Next, the wallpaper 1 and the icon 1 generated above, a wallpaper library, and an image library may be input to the overall effect verification module 104 for processing. The overall effect verification module 104 may identify the generated wallpaper 1 as false according to the generated wallpaper 1 and real wallpaper in the wallpaper library, and inversely adjust the wallpaper generation module 1031 of the style transfer module 103 according to a loss degree of the wallpaper 1 and the real wallpaper. Thus, the wallpaper generation module 1031 can generate wallpaper 2 closer to the real wallpaper.

The overall effect verification module 104 may further identify the generated icon 1 as false according to the generated icon 1 and a real icon in the icon library, and inversely adjust the icon generation module 1032 of the style transfer module 103 according to a loss degree of the icon 1 and the real icon. Thus, the icon generation module 1032 can generate an icon 2 closer to the real icon. The overall effect verification module 104 before training is completed has relatively-low accuracy. For example, the overall effect verification module 104 may identify real wallpaper in the wallpaper library and a real icon in the icon library as false, or may identify real wallpaper and a real icon as true.

Optionally, the overall effect verification module 104 may further compare whether styles of the generated wallpaper 1 and icon 1 are adapted to each other/consistent with each other, and inversely adjust the wallpaper generation module 1031 and icon generation module 1032 according to a comparison result. Thus, the wallpaper generation module 1031 and the icon generation module 1032 can generate wallpaper 3 and an icon 3 that have consistent styles. In a case that styles of the wallpaper 1 and the icon 1 are adapted to each other/consistent with each other (for example, a matching degree is greater than or equal to a preset threshold), the overall effect verification module 104 may combine the wallpaper 1 and the icon 1 as a theme.

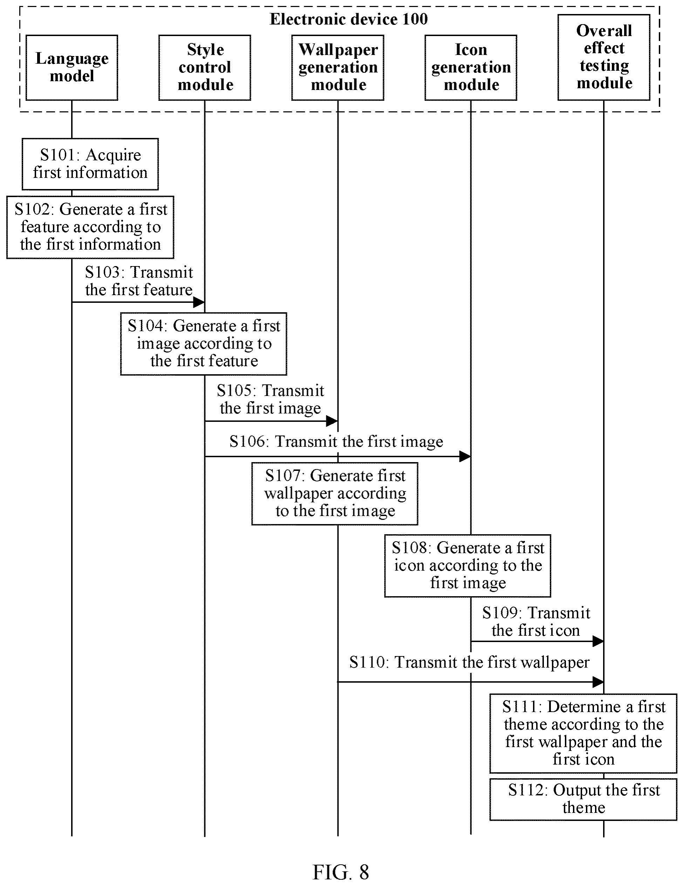

It can be understood that after a plurality of iterations, in cases that a similarity degree of wallpaper generated by the wallpaper generation module 1031 and the real wallpaper is greater than a first threshold, a similarity degree of an icon generated by the icon generation module 1032 and the real icon is greater than a second threshold, a matching degree of the generated wallpaper and icon is greater than a third threshold, and the overall effect verification module 104 can identify both the real wallpaper and the real icon as true, the theme generation model is completely trained. The wallpaper generation module 1031, the icon generation module 1032, and the overall effect verification module 104 of the theme generation model completely trained all have relatively-high accuracy. The theme generation model completely trained may be configured to generate a theme satisfying a personalized requirement of a user. Details can be obtained with reference to FIG. 8 and are not repeated temporarily.

In an implementation, a tester may score a theme (including wallpaper and an icon) generated in each training process. For example, a score interval may be 1 to 5. A higher score indicates that a generated wallpaper and icon are more real and have better effects. A score data set is constructed by scored themes. The score data set is used for inversely adjusting the wallpaper generation module 1031 and the icon generation module 1032. After being completely trained, the theme generation model may select themes of which scores rank top of the generated themes as recommended themes, and output the recommended themes.

Optionally, real wallpaper in the wallpaper library and a real icon in the icon library may be designed by a designer according to basic images in different styles. In addition, the basic images in different styles, and the designed real wallpaper and real icon may serves as training data (where the basic images in different styles serve as input data, and the designed real wallpaper and real icon serve as output data). Thus, the style transfer module 103 can be trained.

Optionally, evaluations of a user on movies, music, etc. may be obtained, and tags corresponding to the evaluations are obtained according to the obtained evaluations. For example, evaluations of a user on movie *Slam Dunk* are "fantastic, adore, and hot-blooded", and tags obtained according to the evaluations are "basketball, hot-blooded youngsters, cartoon", etc. Then, the evaluations and the tags corresponding to the evaluations serve as training data (where the evaluations serve as input data, and the tags serve as output data) such that the language model 101 can be trained.

An application scenario involved in an embodiment of the disclosure and a schematic diagram of a user interface in the scenario will be introduced below.

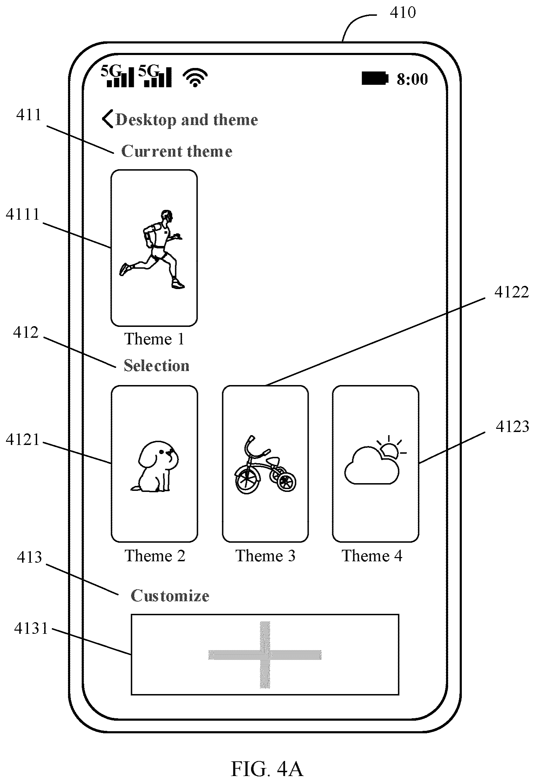

FIG. 4A illustrates a schematic diagram of a user interface of a theme generation process.

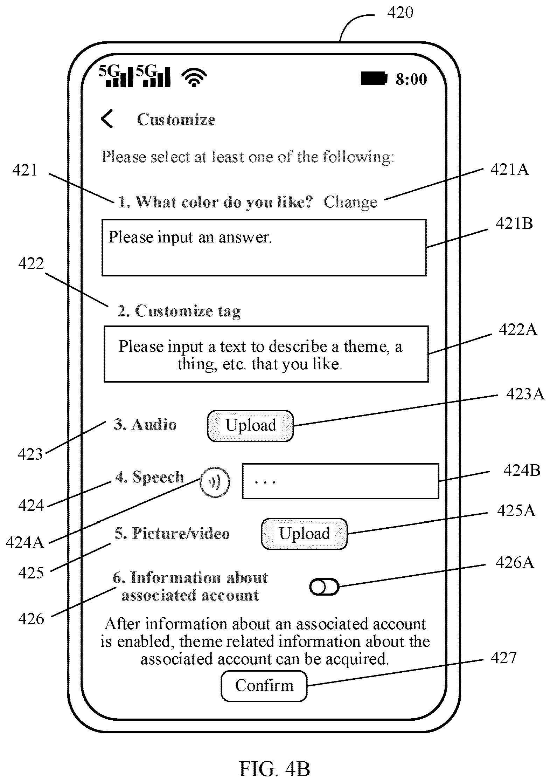

As shown in FIG. 4A, the electronic device 100 may display a user interface 410 (including a title of "desktop and theme"). The user interface 410 is a user interface of theme setting. For example, the user interface 410 is an interface of a theme setting function provided by a setting application of the electronic device 100. The user interface 410 may include a plurality of titles, such as "Current theme", "Selection", and "Customize". A theme 4111 is displayed below the title 411 on the user interface 410. The theme 4111 is a current theme of the electronic device 100. Characters "theme 1" are displayed below the theme 4111. A plurality of themes for the user to select may be included below a title 412, such as a theme 4121, a theme 4122, and a theme 4123. Characters "theme 2" are displayed below the theme 4121. Characters "theme 3" are displayed below the theme 4122. Characters "theme 4" are displayed below the theme 4123. A control 4131 is included below the title 413. The control 4131 may be configured to enable a customization function. In an implementation, the electronic device 100 may display a customized main interface in response to a user operation (which is, for example, a touch operation) on the control 4131. A specific example can be obtained with reference to a user interface 420 shown in FIG. 4B.

As shown in FIG. 4B, the user interface 420 may include a plurality of options, such as an option 421, an option 422, an option 423, an option 424, an option 425, and an option 426. One option may indicate user information in one modality. The option 421 may indicate question information including characters "1. What color do you like?". A control 421A is included on a right side of the option 421. The control 421A displays a character "Change" for changing a current question, that is, changing a question indicated by the characters "What color do you like?". An input box 421B is included below the option 421. The input box 421B displays characters "Please input an answer." such that text content input by a user for the current question can be displayed. The option 422 may indicate text information including characters "2. Customize tag". An input box 422A is included below the option 422. Characters "Please input a text to describe a theme, a thing, etc. that you like." are displayed in the input box 422A such that text content input by a user can be displayed. The option 423 may indicate audio information including characters "3. Audio". A control 423A is included on a right side of the option 423. The control 423A displays a character "Upload" such that audio stored in the electronic device 100 can be uploaded. The option 424 may indicate speech information including characters "4. Speech". A control 424A is included on a right side of the option 424 and may be configured to record a speech of a user. An input box 424B is included on a right side of the control 424A. A character "..." is displayed in the input box 424B such that text content converted from the recorded speech can be displayed. The option 425 may indicate image/video information including a character "Image/video". A control 425A is included on a right side of the option 425. The control 425A displays a character "Upload" such that an image/video stored in the electronic device 100 can be uploaded. The option 426 may indicate information about an associated account, including characters "Information about associated account". A control 426A is included on a right side of the option 426 and may be configured to enable/disable a function of acquiring theme related information about an associated account. Characters "After information about an associated account is enabled, theme related information about the associated account can be acquired." are displayed below the option 426. The user interface 420 further includes a control 427. The control 427 displays a character "Confirm" and may be configured to determine to generate a theme conforming to at least one option mentioned above.

In an implementation, the electronic device 100 may acquire user information in at least one modality in response to a user operation. In some examples, the electronic device 100 may display a character "blue" in the input box 421B in response to a user operation on the input box 421B. The electronic device 100 may acquire question information. The question information indicates that a color that a user likes is blue. In some examples, the electronic device 100 may display characters "I like cats and cartoons, and like quiet atmospheres and simple things" in the input box 422A in response to a user operation on the input box 422A. The electronic device 100 may acquire text information. The text information includes the above characters. In some examples, the electronic device 100 may display, in response to a user operation (which is, for example, a touch operation) on the control 423A, a plurality of pieces of audio stored in the electronic device 100. Next, the electronic device 100 may receive a user operation (which is, for example, a touch operation) on one of the plurality of pieces of audio. The electronic device 100 may acquire information about the audio in response to the user operation. In some examples, the electronic device 100 may display, in response to a user operation (which is, for example, a long-press operation) on the control 424A, a window in which a speech is being recorded. In this case, the electronic device 100 may acquire speech information. In some examples, the electronic device 100 may display, in response to a user operation (which is, for example, a touch operation) on the control 425A, a plurality of images/a plurality of pieces of video stored in the electronic device 100. Next, the electronic device 100 may receive a user operation (which is, for example, a touch operation) on one of the plurality of images/one of the plurality of pieces of video. The electronic device 100 may acquire information about the image/video in response to the user operation.

In an implementation, the electronic device 100 may acquire user information in at least one modality by a server. In some examples, the electronic device 100 may enable, in response to a user operation (which is, for example, a touch operation) on the control 426A, a function of acquiring theme related information about an associated account. In this case, the electronic device 100 may transmits a request to a server to acquire user information in at least one modality of the associated account, such as user information input by a user of the associated account through an interface such as the user interface 420.

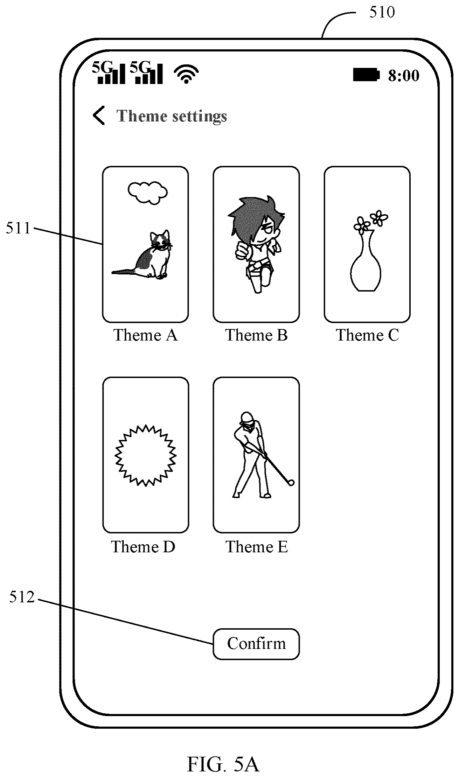

In an implementation, the electronic device 100 may acquire user information in at least one modality, and generate at least one theme according to the user information in at least one modality. In some examples, the electronic device 100 may receive a user operation, and display characters "I like cats and cartoons, and like quiet atmospheres and simple things" in the input box 422A in response to the user operation. Next, the electronic device 100 may generate a plurality of themes according to acquired text information (that is, the above input characters) in response to a user operation (which is, for example, a touch operation) on the control 427, and display an interface of the plurality of themes. A specific example can be obtained with reference to a user interface 510 shown in FIG. 5A.

As shown in FIG. 5A, the user interface 510 may include a plurality of recommended themes, for example, a theme 511 having an indication name of "theme A" and other themes. Any one of the themes may be selected or unselected. The user interface 510 further includes a control 512. The control 512 displays a character "Confirm" and may be configured to set a selected theme as a theme of the electronic device 100.

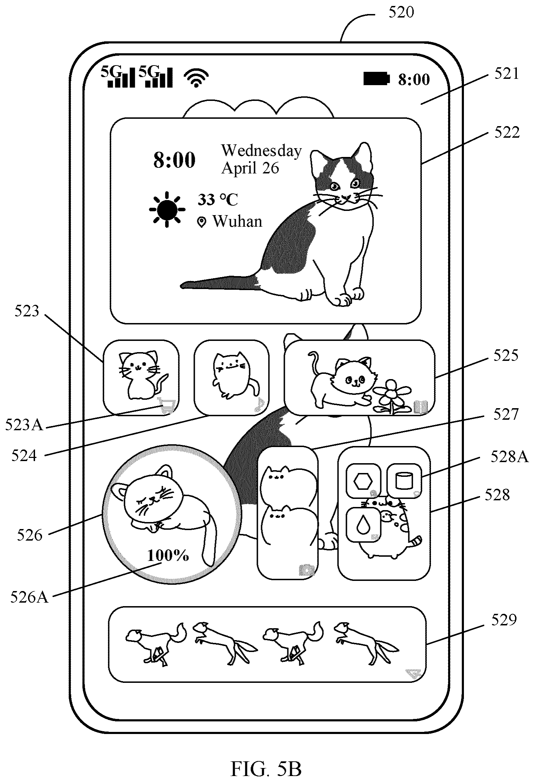

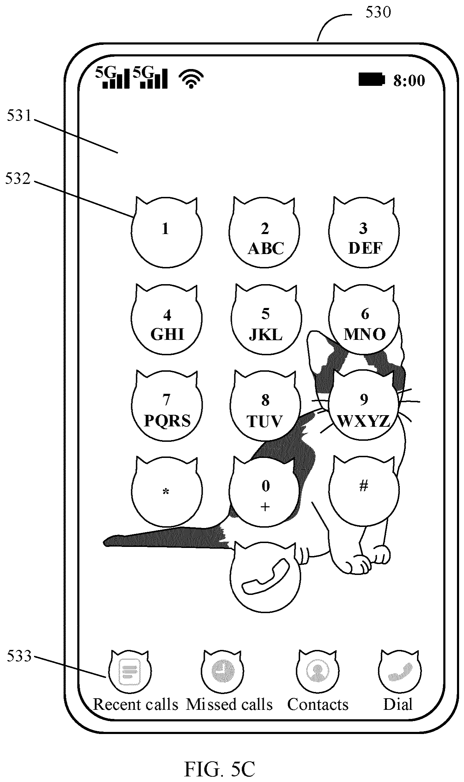

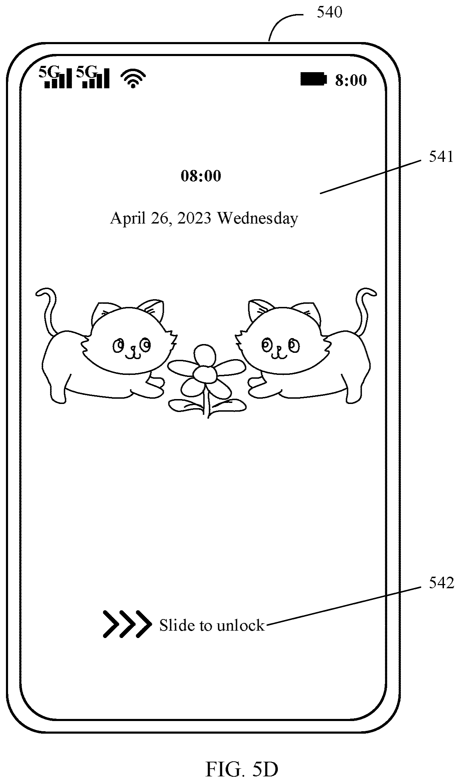

In an implementation, assuming that a theme 511 on the user interface 510 is selected, the electronic device 100 may set the theme 511 as a theme of the electronic device 100 in response to a user operation (which is, for example, a touch operation) on a control 512. A desktop of the electronic device 100 after the theme 511 is set can be obtained with reference to a user interface 520 shown in FIG. 5B. A call interface of the electronic device 100 after the theme 511 is set can be obtained with reference to a user interface 530 shown in FIG. 5C. A lock screen interface of the electronic device 100 after the theme 511 is set can be obtained with reference to a user interface 540 shown in FIG. 5D.

As shown in FIG. 5B, the user interface 520 may include desktop wallpaper 521, an icon 522, an icon 523, an icon 524, an icon 525, an icon 526, an icon 527, an icon 528, and an icon 529. The content is related to the above user information (such as a text "I like cats and cartoons, and like quiet atmospheres and simple things" input by a user) in at least one modality obtained by the electronic device 100. The icon 522 may represent a time and weather component. The icon 523 may represent a store application. The icon 524 may represent a music application. The icon 525 may represent a reading application. The icon 526 may represent an electric quantity component. The icon 527 may represent a camera application. The icon 528 may represent a folder. The folder may include a plurality of small icons, such as an icon 528A and other icons. The icon 528A may represent a short message service application. The icon 529 may represent a map application.

In an implementation, patterns of the desktop wallpaper 521, the icon 522, the icon 523, the icon 524, the icon 525, the icon 526, the icon 527, the icon 528, and the icon 529 on the user interface 520 are related to characters "cats" and "cartoons" in the text input by the user based on the user interface 420 mentioned above.

In an implementation, patterns of any two icons on the user interface 520 may be different. For example, a pattern of the icon 523 is different from a pattern of the icon 524 on the user interface 520. Outlines of any two icons on the user interface 520 may be different. For example, an outline (a rounded rectangle) of the icon 523 is different from an outline (a circle) of the icon 526 on the user interface 520. Sizes of any two icons on the user interface 520 may be different. For example, a size of the icon 523 is different from a size of the icon 528A on the user interface 520.

In an implementation, a watermark control is further displayed in any icon on the user interface 520. For example, a watermark control 523A is displayed in the icon 523. The watermark control 523A may be configured to indicate that the corresponding icon 523 represents a store application. For another example, a watermark control 526A is displayed in the icon 526. The watermark control 526A may be configured to indicate a current electric quantity percentage of the electronic device 100.

As shown in FIG. 5C, a user interface 530 may include interface wallpaper 531, a plurality of key controls, and a plurality of functional controls. The plurality of key controls, for example, include a key control 532 and other key controls. The key control 532 represents a numeral 1. Outlines of the key controls may be the same. The plurality of functional controls, for example, include a functional control 533 and other functional controls. Characters "Recent calls" are displayed below the functional control 533, and may be used for viewing a latest call record.

In an implementation, a pattern of the interface wallpaper 531 on the user interface 530 is related to "cats" and "cartoons" in the text input by the user based on the user interface 420. The plurality of key controls and the plurality of functional controls are related to characters "cats" and "cartoons" in the text input by the user based on the user interface 420 mentioned above.

As shown in FIG. 5D, the user interface 540 may include lock screen wallpaper 541 and a control 542. The control 542 displays characters "Slide to unlock", and may be configured to release a screen locked state of the electronic device 100. In an implementation, the electronic device 100 may display a user interface 520 shown in FIG. 5B in response to a user operation (which is, for example, a left-to-right slide operation) on the control 542.

In an implementation, different types of wallpaper of a same theme may be different. For example, any two of the lock screen wallpaper 541 on the user interface 540 shown in FIG. 5D, interface wallpaper 531 on the user interface 530 shown in FIG. 5C, and the desktop wallpaper 521 on the user interface 520 shown in FIG. 5B are different.

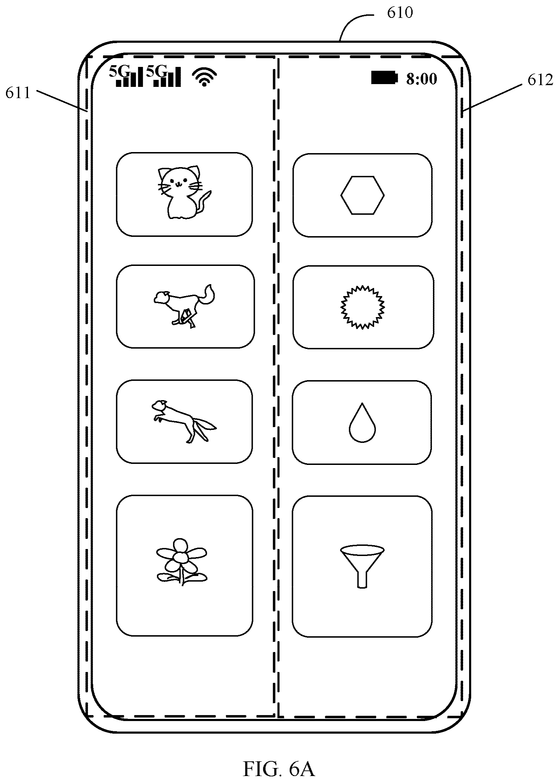

In an implementation, the electronic device 100 may set a plurality of themes, and display different themes in different areas of the screen. In some examples, when the electronic device 100 displays the user interface 510 shown in FIG. 5A, the electronic device 100 may receive a user operation, and select two themes on the user interface 510 in response to the user operation, for example, a theme 511 having an indication name of "theme A" and a theme having an indication name of "theme D". Next, the electronic device 100 may set the theme 511 and the theme having an indication name of "theme D" as themes of the electronic device 100 in response to a user operation (which is, for example, a touch operation) on the control 512. A desktop of the electronic device 100 after the two themes are set can be obtained with reference to a user interface 610 shown in FIG. 6A. As shown in FIG. 6A, the user interface 610 may include an area 611 and an area 612. Themes displayed by the area 611 and the area 612 are different. For example, the area 611 may be configured to display an interface of the theme 511. The area 612 may be configured to display an interface indicating a theme having an indication name of "theme D".

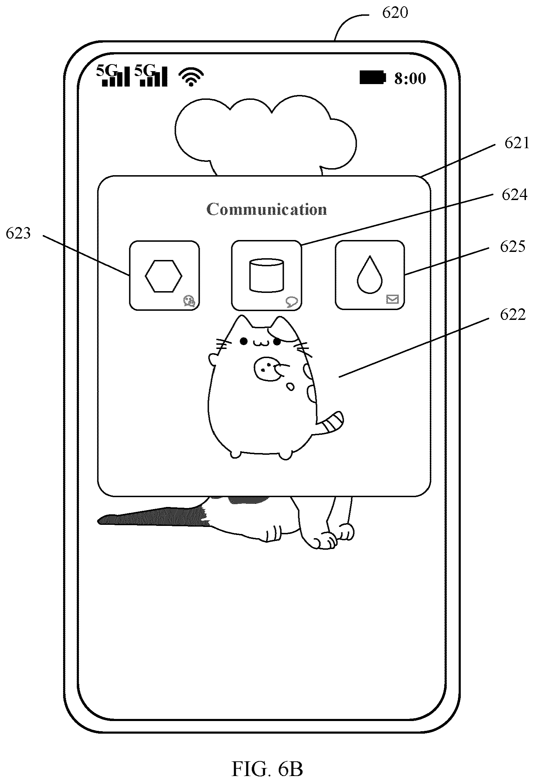

In an implementation, the electronic device 100 may display an interface of a folder in response to a user operation (which is, for example, a touch operation) on the icon 528 on the user interface 520 shown in FIG. 5B. A specific example can be obtained with reference to a user interface 620 shown in FIG. 6B. As shown in FIG. 6B, the user interface 620 may include a window 621 (including title "communication"). The window 621 may include folder wallpaper 622, an icon 623, an icon 624, and an icon 625. The icon 623 may represent a WeChat application. The icon 624 may represent a short message service application. The icon 625 may represent a mail application.

In an implementation, the electronic device 100 may divide corresponding icon categories according to functions of applications. Styles of icons in different categories may be different. For example, a store application represented by the icon 523, a music application represented by the icon 524, a reading application represented by the icon 525, and a camera application represented by the icon 527 on the user interface 520 shown in FIG. 5B all belong to entertainment applications. Patterns of these icons are related to characters "cats" and "cartoons" in the text input by the user based on the user interface 420 mentioned above. The WeChat application represented by the icon 623, the short message service application represented by the icon 624, and the mail application represented by the icon 625 on the user interface 620 shown in FIG. 6B all belong to communication applications. Patterns of these icons are related to the character "simple" in the text input by the user based on the user interface 420 mentioned above.

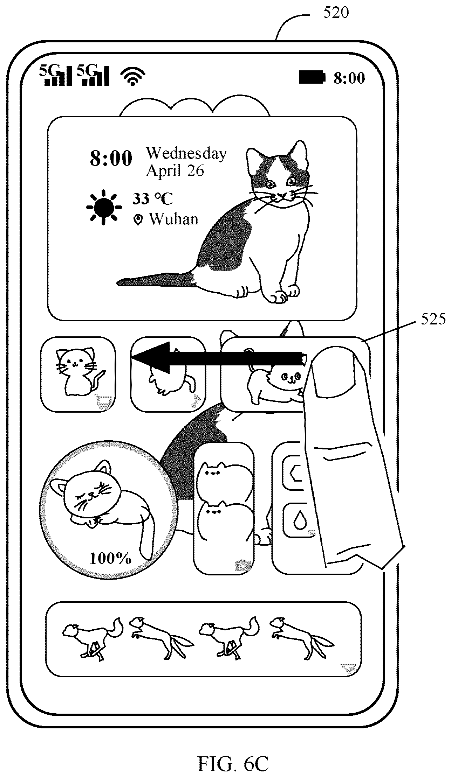

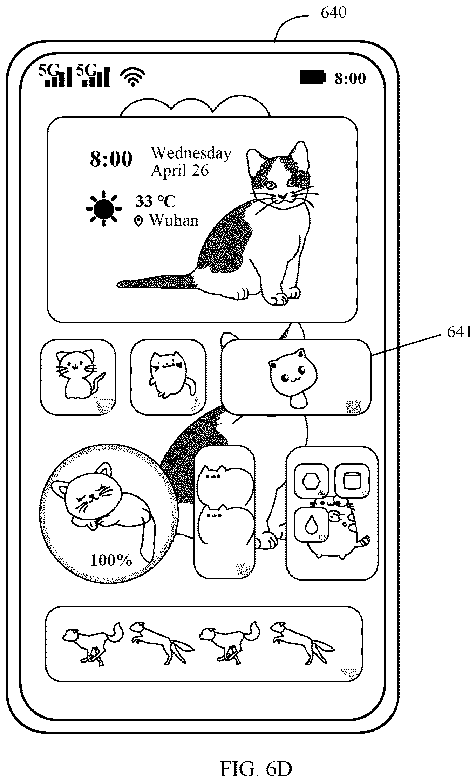

In an implementation, the electronic device 100 may receive a user operation, and change a pattern of any icon in response to the user operation. In some examples, the electronic device 100 may change, in response to a user operation (which is, for example, a left-slide operation) on an icon 525 on a user interface 520 shown in FIG. 6C, a pattern of the icon 525. In this case, the electronic device 100 may display a user interface 640 shown in FIG. 6D. As shown in FIG. 6C, the user interface 640 is similar to the user interface 520 shown in FIG. 6C. A difference lies in that a pattern of the icon 641 on the user interface 640 is different from a pattern of the icon 525 on the user interface 520.

Not limited to the case in the above example, in some other examples, the electronic device 100 may enable, in response to a user operation (which is, for example, a touch operation) on a control 426A on the user interface 420 shown in FIG. 4B, a function of acquiring theme related information about an associated account. In this case, the user interface 420 may further include an associated account list, an addition control, and a deletion control. The associated account list may include information about an account associated with the electronic device 100. The addition control may be configured to add information about a new associated account. The deletion control may be configured to delete information about an existing associated account.

Not limited to the case in the above example, in some other examples, the electronic device 100 may receive a user operation, and process any icon in response to the user operation, for example, move a position of an icon, delete an icon, and adjust a size of an icon. For example, the electronic device 100 may display, in response to a user operation (which is, for example, a long-press operation) on an icon 523 on the user interface 520 shown in FIG. 5B, an editing interface of an icon. Next, the electronic device 100 may move, in response to a user operation (which is, for example, a dragging operation from top to bottom) on the icon 523, the icon 523 downwards.

Not limited to the case in the above example, in some other examples, the electronic device 100 may change a current theme of the electronic device 100 in response to a user operation. For example, the electronic device 100 may change a current theme 4111 of the electronic device 100 to a theme 4121 in response to a user operation (which is, for example, a touch operation) on the theme 4121 on the user interface 410 shown in FIG. 4A.

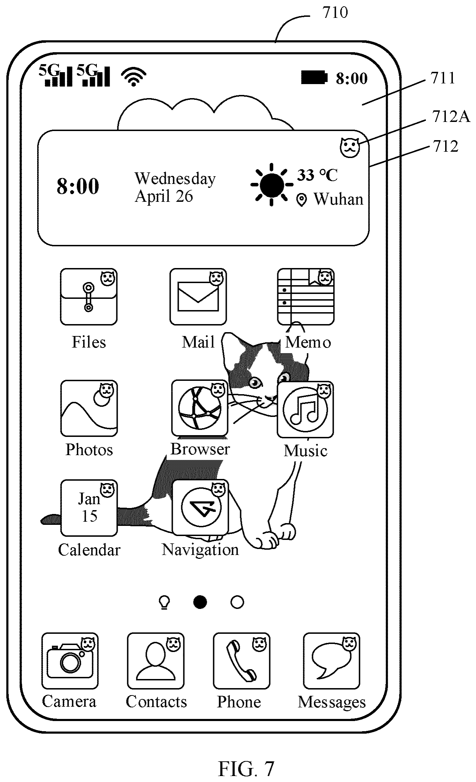

Not limited to the case in the above example, in some other examples, a desktop after the electronic device 100 sets the theme 511 on the user interface 510 can be obtained with reference to a user interface 710 shown in FIG. 7. As shown in FIG. 7, the user interface 710 may include desktop wallpaper 711, and a plurality of icons. The plurality of icons include, for example, an icon 712 and other icons. The icon 712 may represent a time and weather component. A control is further displayed in any icon. For example, a control 712A is displayed at an upper right corner of the icon 712. A pattern (such as a pattern of the control 712A) of any control and a pattern of the desktop wallpaper 711 are related to "cats" and "cartoons" in the above text input by the user based on the user interface 420.

The method for generating a theme provided in an embodiment of the disclosure will be introduced next.

With reference to FIG. 8, a schematic flowchart of a method for generating a theme provided in an embodiment of the disclosure is shown in FIG. 8. The method can be applied to the electronic device 100 shown in FIG. 1. The method can be applied to the electronic device 100 shown in FIG. 2. The method can be applied to the electronic device 100 shown in FIG. 3. The method includes but is not limited to the following steps.

S101: A language model acquires first information.

In an implementation, the first information may include user information in at least one modality. For example, the user information includes but is not limited to a text, a speech, an image, audio, video, etc. The first information may represent a user feature such as a user preference. In some examples, the first information may include information input by a user and received by the electronic device 100. For example, the information includes but is not limited to: text information (including a text input by a user for a question and/or a text input by a user autonomously) input by a user, an audio file uploaded by the user, speech information recorded by the user, an image/video uploaded by the user, etc. Specific examples can be obtained with reference to question information, text information, audio information, speech information, and image/video information in FIG. 4B. In some other examples, the first information may include information about a user and obtained by the electronic device 100 by a server. A specific example can be obtained with reference to information about a theme in FIG. 4B. Not limited thereto, in some other examples, the first information may further include information about a user that is obtained by the electronic device 100 by a use record of an application or through other methods. For example, the electronic device 100 may acquire evaluation information about the user in the application. For example, the evaluation information includes but is not limited to evaluations of a user on movies, music, news, hot spots, etc.

S102: The language model generates a first feature according to the first information.

In an implementation, the language model may process the acquired first information, for example, parse and encode the first information, and output a first feature after encoding. The first feature may represent information that a user likes/is interested in by a feature parameter (such as a feature vector). In some examples, in a case that the first information is text information, the language model may perform semantic parsing on the text information, use a result obtained through the parsing as a label, encode the label, and obtain a first feature. In some examples, in a case that the first information is speech information, a semantic model may first convert the speech information to text information, and then obtain a first feature through the above method for processing the text information. In some examples, in a case that the first information is an image, the language model may parse the image, obtain information about the image, which includes but is not limited to element information, color information, a meaning represented by the image, etc., then encode the information about the image, and obtain a first feature. In some examples, in a case that the first information is audio information, which is, for example, a song, the language model may parse the song, obtain corresponding information, such as lyrics, a singer, and a style, of the song, then separately parse and encode the lyrics, the singer, and the style, and obtain a first feature. In some examples, in a case that the first information is video information, the language model may process an image in the video information through the above method for processing the image information, process audio in the video information through the above method for processing the audio information, combine the two processing results, perform encoding, and obtain a first feature.

S103: The language model transmits the first feature to a style control module.

In an implementation, the style control module is, for example, an image generation module. The image generation module may generate a corresponding image by text descriptions.

S104: The style control module generates a first image according to the first feature.

In an implementation, the style control module may serves as a decoder to first decode the first feature, and generate the first image. In some examples, the first image may include a plurality of basic images. Each basic image may indicate information that a user likes/is interested in.

S105: The style control module transmits the first image to a wallpaper generation module.

S106: The style control module transmits the first image to an icon generation module.

A sequence of S105 and S106 is not limited.

S107: The wallpaper generation module generates first wallpaper according to the first image.

In an implementation, the wallpaper generation module may select at least one basic image from the first image, and generate the first wallpaper, optionally, and a first score corresponding to the first wallpaper. In some examples, the first wallpaper may include a plurality of pieces of wallpaper in different types. For example, the wallpaper includes but is not limited to desktop wallpaper, lock screen wallpaper, interface wallpaper, etc. In some examples, the first score may include a plurality of scores, and each piece of wallpaper corresponds to a score. The score may represent a recommendation degree of the wallpaper, and may be subsequently used for acquiring a recommended theme.

In some examples, the first information is a text "I like cats and cartoons, and like quiet atmospheres and simple things" input based on the user interface 420 shown in FIG. 4B. The first image obtained according to the first information may include a basic image 1 (that is, "two cats and a flower" in the lock screen wallpaper 541 on the user interface 540 shown in FIG. 5D) and a basic image 2 (that is, "cats holding a biscuit" in folder wallpaper 622 on the user interface 620 shown in FIG. 6B). The first wallpaper generated according to the first image includes the lock screen wallpaper 541 on the user interface 540 shown in FIG. 5D and the folder wallpaper 622 on the user interface 620 shown in FIG. 6B. The lock screen wallpaper 541 is generated according to the basic image 1 in the first image. The folder wallpaper 622 is generated according to the basic image 2 in the first image.

S108: The icon generation module generates a first icon according to the first image.

In an implementation, the first icon may include a plurality of icons, for example, N icons. Further, N is a positive integer, and N may be a number of applications (optionally, and components) of the electronic device 100.

In an implementation, the first icon may correspond to a second score. In some examples, the second score may include a plurality of scores, for example, N scores. One icon corresponds to one score. The score may represent a recommendation degree of the icon, and may be subsequently used for acquiring a recommended theme.

In an implementation, the icon generation module may generate the first icon according to the first image and information (such as a name, a label, and a function of the application, or a color, a pattern, and an outline of an original icon of the application) about the application.

In some examples, the icon generation module may first generate a pattern and an outline of an icon according to the first image, then generate a watermark according to the information about the application, combine the pattern and the outline of the icon and the watermark, and obtain the first icon. The watermark may indicate the information about the application. For example, the first image is "cat 1" in an icon 523 on the user interface 520 shown in FIG. 5B. The pattern of the generated icon is also "cat 1". The outline of the icon is a rounded rectangle. The application is a store application. The generated watermark is an original icon of the store application. The pattern "cat 1", the rounded rectangle, and the watermark are combined, such that the icon 523 is obtained.

Through such a method, even if an application corresponding to a pattern and an outline of an icon cannot be directly identified by a user, information about an application may be indicated by a watermark. Thus, the user can conveniently identify the application corresponding to the icon, and a use feeling of the user can be effectively improved. Moreover, consistency of styles of the icon and the wallpaper can be ensured. An overall style of a theme has high uniformity and desirable effect. Functional availability can be effectively improved.

In some other examples, the icon generation module may generate a pattern and an outline of an icon according to the first image and the information about the application. The following two cases may be included.

Case 1: In a case of any application, the icon generation module may generate an icon of the application according to the first image and information about the application. This can be understood as icons of different applications being generated through different methods. Examples of a generation method are as follows:
in some examples, the icon generation module may generate a pattern of an icon according to the first image, then generate an outline of the icon according to information about the application, combine the pattern and the outline of the icon, and obtain the first icon. For example, the first image is "cat 2", and the pattern generated according to the first image is also "cat 2". The application is a "music application", and an outline of an icon is an outline of an original icon of the music application. Finally, the pattern "cat 2" and the outline are combined, and the icon of the music application is obtained.

In some examples, the icon generation module may generate a label/watermark according to the first image, then combine the label/watermark with the original icon of the application, and obtain the first icon. This can be understood as locally adjusting the original icon of the application. For example, the first image is "cat 3" of a control 712A on a user interface 710 shown in FIG. 7. The generated label/watermark is "cat 3". The application is a time and weather component. Then, the label/watermark "cat 3", and an original icon (such as an icon of a remaining part other than the control 712A in the icon 712) of the time and weather component are combined, such that the icon 712 is obtained.

In some examples, the icon generation module may generate an outline of an icon according to the first image, then generate a pattern of the icon according to information about the application, combine the pattern and the outline of the icon, and obtain the first icon. For example, the first image is "cat 4". An outline generated according to the first image is a "cat" outline of a functional control 533 on the user interface 530 shown in FIG. 5C. A pattern generated according to information about the application is a "record" pattern in the functional control 533. Then, the "cat" outline and the "record" pattern are combined, such that the functional control 533 is obtained.

Case 2: The icon generation module may divide icons corresponding to applications to a plurality of different categories according to information about the applications, then generate patterns and outlines in a plurality of styles according to the categories of the icons, combine patterns and outlines in the same/consistent style, and obtain the first icon. This can be understood as icons of applications in different categories being generated through different methods. For example, a store application, a music application, a reading application, and a camera application are categorized as entertainment applications according to functions. A WeChat application, a short message service application, and a mail application are categorized as communication applications according to functions. Patterns and outlines in a style 1 are generated for the entertainment applications. For example, patterns of an icon 523, an icon 524, an icon 525, and an icon 527 on the user interface 520 shown in FIG. 5B are related to "cats" and "cartoons" in the above input text. That is, the patterns have the style 1. Patterns and outlines in a style 2 are generated for the communication applications. For example, patterns of an icon 623, an icon 624, and an icon 625 on the user interface 620 shown in FIG. 6B are related to "simple" in the above input text. That is, the patterns have the style 2. It can be understood that generation processes of outlines in different styles are similar to that of patterns in different styles, and will not be repeated. Finally, the patterns in the style 1 and the outlines in the style 1 are combined, such that icons of entertainment applications are obtained. The patterns in the style 2 and the outlines in the style 2 are combined, such that icons of communication applications are obtained.

A method for generating a pattern and an outline of a first icon according to a first image, optionally, and information about an application will be illustratively described next.

In an implementation, the icon generation module may acquire number N of applications (optionally, and components) of the electronic device 100, then randomly select N basic images from the first image, and generate icons (that is, first icons) of N applications/components. One icon corresponds to one basic image.

In some examples, the first information is a text "I like cats and cartoons, and like quiet atmospheres and simple things" input based on the user interface 420 shown in FIG. 4B. The first icon includes, for example, the icon 523 and the icon 524 on the user interface 520 shown in FIG. 5B. A basic image corresponding to the icon 523 in the first image is "cat 1" in the icon 523. A basic image corresponding to the icon 524 is "cat 4" in the icon 524.

In some examples, the first information is a text "I like cats and cartoons, and like quiet atmospheres and simple things" input based on the user interface 420 shown in FIG. 4B. The first icon includes, for example, the icon 523 and the icon 526 on the user interface 520 shown in FIG. 5B. An outline of the icon 523 is a rounded rectangle. An outline of the icon 526 is a circle.

In some examples, the first information is a text "I like cats and cartoons, and like quiet atmospheres and simple things" input based on the user interface 420 shown in FIG. 4B. The first icon includes, for example, the icon 523 and the icon 528A on the user interface 520 shown in FIG. 5B. A size of the icon 523 is greater than a size of the icon 528A.

Not limited to the above implementation, in another implementation, in cases of N applications/components of the electronic device 100, the icon generation module may generate more than N icons, specifically, may generate a plurality of icons for any application/component for a user to select. For example, the electronic device 100 may display one of the icons as an icon of the application/component. Subsequently, the electronic device 100 may receive a user operation on the icon, and switch the icon of the application/component to another icon in response to the user operation. A specific example can be obtained with reference to FIG. 6C and FIG. 6D.

A sequence of S107 and S108 is not limited.

S109: The icon generation module transmits the first icon to the overall effect verification module.

S110: The wallpaper generation module transmits the first wallpaper to the overall effect verification module.

A sequence of S109 and S110 is not limited.

S111: The overall effect verification module determines the first theme according to the first wallpaper and the first icon.

In an implementation, the overall effect verification module may compare whether styles of the first wallpaper and the first icon are adapted to each other/consistent with each other. In a case that the styles of the first wallpaper and the first icon are adapted to each other/consistent with each other (for example, a matching degree of the first wallpaper and the first icon is greater than a third threshold), the overall effect verification module determines a plurality of themes according to the first wallpaper and the first icon, optionally, and third scores corresponding to the plurality of themes, and then determine themes of which scores rank top of the plurality of themes as the first themes. In some examples, the third score may include a plurality of scores, and one theme corresponds to one score. The third score may be related to the first score and the second score.

In an implementation, the overall effect verification module may further inversely adjust the wallpaper generation module and the icon generation module according to a comparison result of the first wallpaper and the first icon. Thus, the wallpaper generation module and the icon generation module can generate wallpaper and an icon that have the consistent styles. Consistency of styles of an icon and wallpaper of a theme is ensured, an overall effect of the theme is improved, and an ornamental performance is high.

In an implementation, the overall effect verification module may obtain a first loss degree according to the first wallpaper and real wallpaper in the wallpaper library, and inversely adjust the wallpaper generation module according to the first loss degree. Thus, the wallpaper generated by the wallpaper generation module can have an effect same as that of the real wallpaper. That is, wallpaper closer to the real wallpaper can be generated. A use requirement of a user can be satisfied, and an ornamental performance of a theme can be improved.

In an implementation, the overall effect verification module may obtain a second loss degree according to the first icon and a real icon in the icon library, and inversely adjust the icon generation module according to the second loss degree. Thus, the icon generated by the icon generation module can have an effect the same as that of the real icon. That is, an icon closer to the real icon can be generated. A use requirement of a user can be satisfied, and an ornamental performance of a theme can be improved.

S112: The overall effect verification module outputs a first theme.

In an implementation, after determining the first theme, the overall effect verification module may output the first theme, for example, display the first theme by a display. In some examples, the first information obtained by the language module is, for example, a text "I like cats and cartoons, and like quiet atmospheres and simple things" input by the user based on the user interface 420 shown in FIG. 4B. First themes output by the overall effect verification module are, for example, five themes included on the user interface 510 shown in FIG. 5A: a theme A, a theme B, a theme C, a theme D, and a theme E. The five themes may be arranged according to scores in a descending manner from left to right and from top to bottom. For example, a score of the theme A is 4.9. A score of the theme B is 4.7. A score of the theme C is 4.5. A score of the theme D is 4.2. A score of the theme E is 4.0.

Not limited to the above implementation, in another implementation, S102 to S111 may alternatively be performed by a server. S101 may be replaced with a step as follows: the electronic device 100 transmits the first information to a server. S112 may be replaced with a step as follows: the server transmits the first theme to the electronic device 100.

Not limited to the above implementation, in another implementation, the user may select any one of the first themes as a current theme of the electronic device 100. An example in which the electronic device 100 displays one theme can be obtained with reference to a user interface 520 shown in FIG. 5B. The user interface 520 may include the selected theme, such as the theme A on the user interface 520 shown in FIG. 5B.

Not limited to the above implementation, in another implementation, the user may select a plurality of themes of the first themes as current themes of the electronic device 100. The electronic device 100 may display different themes in different areas. An example in which the electronic device 100 displays a plurality of themes can be obtained with reference to a user interface 610 shown in FIG. 6A. The user interface 610 may include two selected themes (such as a theme A and a theme D on a user interface 520 shown in FIG. 5B). The area 611 is configured to display the theme A. The area 612 is configured to display the theme D.

In the method shown in FIG. 8, the electronic device may acquire user information in at least one modality, obtain a more accurate first feature based on the user information in at least one modality, generate, based on such a first feature, a first image capable of indicating a user preference, and then generate a first theme that a user likes/loves according to the first image. Through such a method, a personalized requirement of the user can be satisfied, a personalized theme suitable for the user can be provided for the user, user experience can be improved, and functional availability is high. Moreover, the first image may serves as a unified standard for generating the first wallpaper and the first icon of the first theme such that styles of the first wallpaper and the first icon can be kept consistent. Thus, uniformity of an overall style of the first theme can be improved, an ornamental performance of the theme can be enhanced, an aesthetic requirement of the user during usage can be satisfied, and user experience can be further improved.

The above implementations are merely particular implementations of the disclosure, but the scope of protection of the disclosure is not limited thereto. Any change or substitution that can be easily conceived by those skilled in the art within the technical scope disclosed by the disclosure should all fall within the scope of protection of the disclosure. Thus, the scope of protection of the disclosure should be subject to the scope of protection of the claims.

## Claims

1. A method for generating a theme, applied to an electronic device, comprising:
displaying a first interface, wherein the first interface comprises a plurality of themes and a first control;
receiving a first operation on the first control;
displaying a second interface in response to the first operation, wherein the second interface comprises at least one option, and the at least one option is used for receiving at least one type of information input by a user;
receiving a second operation on the at least one option;
acquiring first information about the user in response to the second operation; and
displaying a third interface according to the first information, wherein the third interface comprises one or more first themes.

2. The method according to claim 1, wherein the first information comprises at least one of: text information, audio information, speech information, image information, video information, and information about an associated user of the user.

3. The method according to claim 1 or 2, wherein the text information comprises indication color information.

4. The method according to any one of claims 1 to 3, further comprising:
receiving a third operation on the one or more first themes; and
displaying a fourth interface in response to the third operation, wherein the fourth interface comprises first content and/or second content, the first content belongs to a second theme, the second content belongs to a third theme, the one or more first themes comprise the second theme and the third theme, the first content is wallpaper or an icon, and the second content is wallpaper or an icon.

5. The method according to any one of claims 1 to 4, further comprising:
generating a first feature of the user according to the first information;
generating a first image according to the first feature, wherein the first image comprises a plurality of basic images, and the basic image indicates information that the user likes or is interested in; and
generating a plurality of pieces of first wallpaper and a plurality of first icons according to the first image, wherein the one or more first themes comprise the plurality of pieces of first wallpaper and the plurality of first icons.

6. The method according to claim 5, wherein the first icon corresponds to one or more basic images.

7. The method according to claim 5 or 6, further comprising:
generating, in a case that a second icon of which a matching degree with second wallpaper is greater than a first preset threshold exists in the plurality of first icons, the one or more first themes according to the second wallpaper and the second icon, wherein the second wallpaper is any one of the plurality of pieces of first wallpaper.

8. The method according to any one of claims 5 to 7, wherein the plurality of pieces of first wallpaper comprise wallpaper of a desktop, wallpaper of a lock screen interface, and wallpaper of an interface of an application, and the plurality of first icons comprise an icon of an application and an icon of a functional component.

9. The method according to any one of claims 5 to 8, wherein the first icon is related to the first information, and the first icon indicates a first application;
a pattern and an outline of the first icon are both related to the first information, and a watermark of the first icon is related to information about the first application; or
a pattern and an outline of the first icon are both related to information about the first application, and a watermark of the first icon is related to the first information; or
a pattern of the first icon is related to the first information, and an outline of the first icon is related to information about the first application; or
a pattern of the first icon is related to information about the first application, and an outline of the first icon is related to the first information; and
the information about the first application comprises at least one of: a name, a label, a function, and a system default original icon of the first application.

10. The method according to any one of claims 4 to 9, wherein the third interface comprises first indication information and second indication information, the first indication information indicates the second theme, the third indication information indicates the third theme, and the receiving a third operation on the one or more first themes comprises:
receiving the third operation on the first indication information and the second indication information; and
displaying the fourth interface in response to the third operation, wherein the fourth interface comprises a third icon and a fourth icon, the third icon indicates a second application, the fourth icon indicates a third application, functional categories to which the second application and the third application belong are different, the third icon belongs to an icon of the second theme, and the fourth icon belongs to an icon of the third theme.

11. The method according to any one of claims 4 to 10, wherein the third interface comprises the first indication information, the first indication information indicates the second theme, and the receiving a third operation on the one or more first themes comprises:
receiving the third operation on the first indication information on the third interface;
displaying the fourth interface in response to the third operation, wherein the fourth interface comprises a fifth icon, and the fifth icon indicates a fourth application;
receiving a fourth operation on the fifth icon on the fourth interface;
modifying the fifth icon to a sixth icon in response to the fourth operation; and
displaying the sixth icon on the fourth interface, wherein the sixth icon indicates the fourth application.

12. The method according to claim 7, wherein the second wallpaper corresponds to a first score, the second icon corresponds to a second score, and the generating the one or more first themes according to the second wallpaper and the second icon comprises:
generating a plurality of fourth themes according to the second wallpaper and the second icon;
acquiring a plurality of third scores corresponding to the plurality of fourth themes, wherein the third score is related to the first score and the second score; and
selecting the one or more first themes from the plurality of fourth themes according to the plurality of third scores, wherein a score corresponding to the first theme is greater than or equal to a second preset threshold.

13. The method according to any one of claims 4 to 12, wherein after the displaying the fourth interface, the method further comprises:
acquiring second information about a second user;
generating one or more fifth themes according to the second information, wherein the fifth theme comprises a plurality of pieces of third wallpaper and a plurality of seventh icons, and the fifth theme is different from the first theme; and
displaying a fifth interface, wherein the fifth interface comprises third indication information, and the third indication information indicates the fifth theme.

14. An electronic device, comprising: a transceiver, a processor, and a memory, wherein the memory is configured to store a computer program, and the processor calls the computer program to perform the method according to any one of claims 1 to 13.

15. A computer storage medium, storing a computer program, wherein the computer program implements the method according to any one of claims 1 to 13 when executed by a processor.

16. A method for generating a theme, applied to an electronic device, comprising:
acquiring first information about a first user, wherein the first information comprises at least two of: text information, audio information, speech information, image information, and video information;
generating a first feature of the first user according to the first information;
generating one or more first themes according to the first feature, wherein the first theme comprises a plurality of pieces of first wallpaper and a plurality of first icons;
displaying a first interface, wherein the first interface comprises first indication information, and the first indication information indicates the first theme; and
displaying a second interface, wherein the second interface comprises first content and second content, the first content belongs to a second theme, the second content belongs to a third theme, the one or more first themes comprise the second theme and the third theme, the first content is wallpaper or an icon, and the second content is wallpaper or an icon.

17. The method according to claim 16, wherein the plurality of pieces of first wallpaper comprise wallpaper of a desktop, wallpaper of a lock screen interface, and wallpaper of an interface of an application, and the plurality of first icons comprise an icon of an application and an icon of a functional component.

18. The method according to claim 16 or 17, wherein the acquiring first information about a first user comprises:
receiving a first operation;
transmitting a first request to a network device in response to the first operation; and
receiving the first information transmitted by the network device based on the first request, wherein the first information is information input by an associated user of the first user.

19. The method according to claim 16 or 17, wherein the first icon is related to the first information, and the first icon indicates a first application;
a pattern and an outline of the first icon are both related to the first information, and a watermark of the first icon is related to information about the first application; or
a pattern and an outline of the first icon are both related to information about the first application, and a watermark of the first icon is related to the first information; or
a pattern of the first icon is related to the first information, and an outline of the first icon is related to information about the first application; or
a pattern of the first icon is related to information about the first application, and an outline of the first icon is related to the first information; and
the information about the first application comprises at least one of: a name, a label, a function, and a system default original icon of the first application.

20. The method according to claim 16 or 17, wherein the first interface comprises second indication information and third indication information, the second indication information indicates the second theme of the plurality of first themes, the third indication information indicates the third theme of the plurality of first themes, and the displaying a second interface comprises:
receiving a second operation on the second indication information and the third indication information; and
displaying a second interface in response to the second operation, wherein the second interface comprises a second icon and a third icon, the second icon indicates a second application, the third icon indicates a third application, functional categories to which the second application and the third application belong are different, the second icon belongs to an icon of the second theme, and the third icon belongs to an icon of the third theme.

21. The method according to claim 16 or 17, wherein the first interface comprises second indication information and third indication information, the second indication information indicates a second theme of the plurality of first themes, the third indication information indicates a third theme of the plurality of first themes, and the displaying a second interface comprises:
receiving a second operation on the second indication information and the third indication information; and
displaying the second interface in response to the second operation, wherein the second interface comprises a first area and a second area, wallpaper and an icon of the first area belong to the second theme, and wallpaper and an icon of the second area belong to the third theme.

22. The method according to claim 16 or 17, further comprising:
receiving a third operation on the first indication information on the first interface;
displaying a third interface in response to the third operation, wherein the third interface comprises a fourth icon, and the fourth icon indicates a fourth application;
receiving a fourth operation on the fourth icon on the third interface;
modifying the fourth icon to a fifth icon in response to the fourth operation; and
displaying the fifth icon on the third interface, wherein the fifth icon indicates the fourth application.

23. The method according to claim 16 or 17, wherein the generating one or more first themes according to the first information comprises:
generating a first image according to the first information;
generating the plurality of pieces of first wallpaper and the plurality of first icons according to the first image; and
obtaining, in a case that a matching degree of the plurality of pieces of first wallpaper and the plurality of first icons is greater than or equal to a first preset threshold, the first theme according to the plurality of pieces of first wallpaper and the plurality of first icons.

24. The method according to claim 23, wherein the first image comprises a plurality of second images, and the first icon corresponds to one or more second images.

25. The method according to claim 16 or 17, wherein the generating one or more first themes according to the first information comprises:
generating a plurality of pieces of second wallpaper and a plurality of sixth icons according to the first information, wherein the second wallpaper corresponds to a first score, and the sixth icon corresponds to a second score;
generating a plurality of fourth themes according to the plurality of pieces of second wallpaper and the plurality of sixth icons;
acquiring a plurality of third scores corresponding to the plurality of fourth themes, wherein the third score is related to the first score and the second score; and
selecting the one or more first themes from the plurality of fourth themes according to the plurality of third scores, wherein a score corresponding to the first theme is greater than or equal to a preset threshold.

26. The method according to claim 16 or 17, wherein after the displaying a first interface, the method further comprises:
acquiring second information about a second user;
generating one or more fifth themes according to the second information, wherein the fifth theme comprises a plurality of pieces of third wallpaper and a plurality of seventh icons, and the fifth theme is different from the first theme; and
displaying a fourth interface, wherein the fourth interface comprises fourth indication information, and the fourth indication information indicates the fifth theme.

27. An electronic device, comprising: a transceiver, a processor, and a memory, wherein the memory is configured to store a computer program, and the processor calls the computer program to perform the method according to any one of claims 16 to 26.

28. A computer storage medium, storing a computer program, wherein the computer program implements the method according to any one of claims 16 to 26 when executed by a processor.
